# EUROPÄISCHE PATENTSCHRIFT

(11) **EP 3 450 361 B1**
(45) Veröffentlichungstag und Bekanntmachung des Hinweises auf die Patenterteilung: **24.11.2021**
(21) Anmeldenummer: 18169404.3
(22) Anmeldetag: 26.04.2018
(51) Int. Cl.: B65G 47/86, B67C 7/00, B65C 9/02

(54) **TRANSPORTVORRICHTUNG ZUM TRANSPORTIEREN VON BEHÄLTERN**
TRANSPORT DEVICE FOR TRANSPORTING CONTAINERS
DISPOSITIF DE TRANSPORT DESTINÉ AU TRANSPORT DE RECIPIENTS

(30) Priorität: 04.09.2017 DE 102017215454
(43) Veröffentlichungstag der Anmeldung: 06.03.2019
(73) Patentinhaber: KRONES AG, 93073 Neutraubling (DE)
(72) Erfinder: Bauer, Veronika, 93073 Neutraubling (DE)
(74) Vertreter: Grünecker Patent- und Rechtsanwälte PartG mbB

(56) Entgegenhaltungen:
- EP-A1- 1 028 075
- EP-A1- 1 132 207
- EP-A1- 1 264 771
- EP-A1- 3 339 222
- WO-A1-2015/055390
- WO-A1-2016/020293
- WO-A1-2017/140397
- DE-U1-202009 012 064

## Beschreibung

Die Erfindung betrifft eine Transportvorrichtung zum Transportieren von Behältern mit einer Mehrzahl von Pucks, die jeweils zum Aufnehmen und stehenden Transport eines Behälters ausgebildet sind, wobei die Transportvorrichtung einen Zwischenstern und eine Behälter-Hubeinrichtung, die zum Verstellen der vertikalen Position der Behälter ausgebildet ist, umfasst und wobei die Transportvorrichtung derart ausgebildet ist, dass die Behälter mittels der Pucks zu einem Einlauf einer Behandlungsmaschine hin und von einem Auslauf der Behandlungsmaschine weg transportierbar sind.

Transportvorrichtungen zum Transportieren von Behältern sind beispielsweise in der EP 1 132 207 A1, WO2017/140397 A1 und WO 2015/05539 A1 gezeigt. Die WO2017/140397 A1 ist als nächstliegender Stand der Technik betrachtet und offenbart die Merkmale des Oberbegriffs des Anspruchs 1.

Grundsätzlich ist bei der Bearbeitung von Behältern ein geeigneter Transport der Behälter zwischen und in den entsprechenden Behandlungsmaschinen, beispielsweise Etikettierern, Direktdruckmaschinen oder Inspektionsmaschinen, von großer Bedeutung. Es muss sichergestellt werden, dass die Behälter nicht umfallen und in vielen Fällen auch, dass sie in vorgegebenen Abständen und geeigneter Ausrichtung in die Behandlungsmaschine transportiert werden.

Eine besondere Herausforderung stellen dabei Behälter dar, die eine komplexe Form aufweisen, insbesondere keine eigene Standfläche aufweisen oder eine Standfläche, die keine ausreichende Stabilisierung ermöglicht.

Es ist bekannt, sogenannte Pucks zu verwenden, um Behälter einzeln zu transportieren. Die Pucks sind austauschbare Transportelemente die jeweils einen Boden und seitliche Stützelemente, die auf dem Boden stehende Behälter seitlich stützen, aufweisen. Insbesondere kann es sich um tassenförmige Elemente mit einer Aufnahme handeln, in der ein unterer Teil der Behälter aufgenommen wird. Dabei kann ein Puck mit einer Aufnahmeform entsprechend dem aktuell zu bearbeitenden Behältertyp gewählt werden. So können die Behälter stehend transportiert werden und werden dabei durch die entsprechenden Aufnahmen bzw. seitlichen Stützelemente stabilisiert.

Bisher werden bei dieser Art des Transports die Pucks zu einer Behandlungsmaschine transportiert, die Behälter werden dort an die Behandlungsmaschine übergeben, indem sie aus den Pucks herausgehoben werden. In der Behandlungsmaschine laufen die Behälter beispielsweise auf einem Karussell. Nachdem die Behälter die Behandlungsmaschine durchlaufen haben, werden sie jeweils wieder in einen Puck gestellt.

Die Transportvorrichtungen umfassen häufig einen Einlaufstern und einen Auslaufstern und sowohl dem Einlaufstern als auch dem Auslaufstern ist jeweils ein eigener Zwischenstern zugeordnet, wobei ein Zwischenstern in Transportrichtung vor dem Einlaufstern angeordnet ist und ein weiterer Zwischenstern in Transportrichtung nach dem Auslaufstern angeordnet ist. Die Zwischensterne können jeweils als Hebesterne ausgebildet sein, die die Behälter aus den Pucks herausheben oder in die Pucks stellen, indem sie die Behälter anheben bzw. absenken.

Um diese Konfiguration umzusetzen gibt es nun zwei Varianten.

Einerseits können zwei Puck-Transportkreisläufe vorgesehen sein. Um fehlerfrei Entnahme und Wiedereinsetzen der Behälter zu gewährleisten, ist typischerweise im jeweiligen Puck-Transportkreislauf vor dem entsprechenden Hebestern eine Einteilschnecke angeordnet, die die Pucks auf Teilung bringt, sprich, einen geeigneten Teilungsabstand herstellt. Es existieren somit ein Einlauf-Kreislauf und ein Auslauf-Kreislauf. Der Aufbau hat den Vorteil, dass beide Schnecken gleichzeitig eingekoppelt werden können und somit kein Vorlauf bzw. Rücklauf an Pucks nötig ist. Zudem können beide Kreisläufe unabhängig voneinander gesteuert werden.

Allerdings erfordert dies eine hohe Anzahl an Transportbändern und braucht relativ viel Platz. Neben dem hohen Platzbedarf, besteht zudem das Problem, dass eine präzise Steuerung der Pucks bzw. des Puck-Flusses nötig ist, um die Behälter nach dem Durchlaufen der Behandlungsmaschine wieder in einen Puck zu setzen Die Steuerung muss sicherstellen, dass jeder Puck genau an der richtigen Position ist, um einen Behälter im Auslauf der Behandlungsmaschine aufzunehmen. Solche Vorrichtungen und das entsprechende Steuerverfahren sind relativ kompliziert. Das heißt, die beiden Kreisläufe müssen sehr exakt synchronisiert werden. Das macht einen Austausch und ein Reinigen der Pucks sehr aufwändig.

Andererseits kann ein Transportkreislauf für die Pucks vorgesehen sein. Die Einteilschnecke kann typischerweise jedoch nur bis zu einer bestimmten Geschwindigkeit eingekoppelt werden, so dass beim Anfahren der Anlage entweder leere Pucks vorgesteuert (was einen großen logistischen Aufwand mit sich bringt) oder die ersten Behälter mit reduzierter Geschwindigkeit durch die Anlage transportiert werden müssen. Da die Behälter im zweiten Fall in der Behandlungsmaschine noch nicht ihre Nenngeschwindigkeit erreicht haben, können sie dort nicht behandelt werden, so dass die ersten Behälter jeder Charge Ausschuss bilden.

Die der Erfindung zu Grunde liegende Aufgabe besteht also darin, eine bezüglich der Anschaffung und des Betriebs kostengünstige Vorrichtung bereitzustellen, die einen einfachen und platzsparenden Aufbau sowie vereinfachte Wartung und Graniturwechsel ermöglicht und dabei einen geringen Ausschuss gewährleistet.

Die Aufgabe wird durch den Gegenstand der unabhängigen Ansprüche gelöst.

Die Transportvorrichtung ist derart ausgebildet, dass die Behälter-Hubeinrichtung integral mit dem Zwischenstern ausgebildet oder an diesem befestigt ist und derart ausgebildet und im Betrieb derart angeordnet ist, dass sie die Behälter zum Entnehmen der Behälter aus den Pucks vor dem Durchlaufen einer Behandlungsstrecke der Behandlungsmaschine anhebt und zum Einsetzen der Behälter in die Pucks nach dem Durchlaufen der Behandlungsstrecke absenkt. Die Behälter-Hubeinrichtung kann insbesondere zum zeitgleichen Anheben von Behältern im Einlauf und Absenken von Behältern im Auslauf der Behandlungsmaschine ausgebildet sein.

Dadurch, dass das Anheben und Absenken der Behälter nicht mehr mit separaten HubMechanismen, beispielsweise zwei separaten Hebesternen, erfolgt sondern mittels des Zwischensterns, der beide Funktionen übernimmt, ergeben sich niedrigere Investitionskosten, niedrigere Betriebskosten, kürzere Umstellzeiten beim Garniturwechsel und ein geringerer Platzbedarf. Besonders deutlich macht sich das bemerkbar, wenn Hebesterne verwendet werden. Hebesterne haben relativ hohe Herstellungskosten. Somit können also Investitionskosten besonders stark reduziert werden, wenn genau ein Hebestern zum Heben, Senken, Übergeben und Entnehmen von Behältern vorgesehen ist. Die beanspruchte Transportvorrichtung hat außerdem den Vorteil, dass zum Transport der Pucks aufgrund der nicht mehr vorhandenen räumlichen Trennung, die mit zwei Zwischensternen einhergeht, lediglich ein einziger Puck-Kreislauf nötig ist. Außerdem wird dann auch nur eine Einteilschnecke benötigt. Dies ist im Vergleich zu zwei separaten Puck-Kreisläufen und zwei Einteilschnecken platzsparend und reduziert die Anschaffungskosten, Betriebskosten und Wartungskosten. Weiterhin werden die Umstellzeiten beim Garniturwechsel verkürzt. Außerdem fällt das Problem der exakten Synchronisierung weg. Außerdem ist es möglich, da nur eine Einteilschnecke auf der Einlaufseite nötig ist, dass nach dem Einkoppeln der Einteilschnecke die Maschinengeschwindigkeit auf Nenngeschwindigkeit erhöht werden kann, so dass auch ohne leere Pucks vorzusteuern kein zusätzlicher Ausschuss zum Beginn einer Charge entsteht. Bei einer Verwendung von zwei Einteilschnecken müsste hingegen zuerst ein Puckfluss bis zur zweiten Schnecke sichergestellt werden, wodurch ohne Vorsteuern von leeren Pucks Behälter durch die Maschine transportiert werden ohne das sie bedruckt werden können, da eine feste Behandlungsgeschwindigkeit notwendig ist.

Die Pucks können beispielsweise mittels eines Transportbands oder einer Förderkette gefördert werden, welches die Pucks entlang einer Transportstrecke mitzieht. Grundsätzlich sind auch andere Transportmechanismen, beispielsweise magnetischer Transport, möglich.

Die Transportvorrichtung umfasst erfindungsgemäss einen Einlaufstern und einen Auslaufstern und der Zwischenstern ist zwischen dem Einlaufstern und dem Auslaufstern derart angeordnet, dass er bei der Übergabe der Behälter an den Einlaufstern und der Übernahme von dem Auslaufstern zugleich das Gegenstück zum Einlaufstern und zum Auslaufstern bildet. Der Zwischenstern kann insbesondere zum gleichzeitigen Übergeben von Behältern an einen Einlaufstern und Entnehmen von Behältern aus einem Auslaufstern ausgebildet sein.

Bisher ist bekannt, dem Einlaufstern und dem Auslaufstern jeweils einen eigenen Zwischenstern zuzuordnen, mit dem Behälter an den Einlaufstern übergeben bzw. aus dem Auslaufstern entnommen werden. Ein wie oben beschriebener Zwischenstern, der zugleich dem Einlauf und dem Auslauf zugeordnet ist, hat den Vorteil, dass ein Zwischenstern gespart werden kann. Dies ist platzsparender und reduziert die Kosten, insbesondere wenn es sich bei den Zwischensternen um Hebesterne handelt.

Die Behälter-Hubeinrichtung kann zur Übergabe der Behälter an den Einlaufstern und zur Übernahme der Behälter von dem Auslaufstern ausgebildet sein. Dies ermöglicht, dass es nicht nötig ist, weitere Transportwege oder Transport- oder Übergabevorrichtungen vorzusehen, mit denen der Behälter nach dem Anheben bzw. vor dem Absenken an den Einlaufstern übergeben bzw. von dem Auslaufstern übernommen wird.

Die Behälter-Hubeinrichtung kann derart ausgebildet sein, dass die Behälter derart angehoben werden, dass sie sich nach dem Anheben in einer Position befinden, in der sie an Halteelemente des Einlaufsterns übergebbar sind. So können Behälter von der Höhe, auf der sie in den Pucks transportiert werden auf die Höhe gebracht werden, auf der sie dann im Einlaufstern weiter transportiert und an die Behandlungsstrecke übergeben werden. Die Höhe, in der die Behälter an den Einlaufstern übergeben werden entspricht dabei typischerweise auch der Höhe, in der die Behälter entlang der Behandlungsstrecke transportiert werden.

Die Behälter-Hubeinrichtung kann zur Übernahme der Behälter von Halteelementen des Auslaufsterns und anschließendem Absenken der Behälter ausgebildet sein. Dies ermöglicht, dass kein weiterer Mechanismus notwendig ist, der Behälter von den Halteelementen des Auslaufsterns übernimmt und diese dann an die Behälter-Hubeinrichtung übergibt.

Die Behälter-Hubeinrichtung kann Hubelemente zum Greifen jeweils eines Behälters und eine Kurvenführung umfassen, die derart ausgebildet und im Betrieb derart angeordnet ist, dass die Hubelemente oder je ein Teil eines Hubelements nach dem Greifen der Behälter so weit angehoben werden, dass die Behälter aus den Pucks entnommen werden, und/oder vor dem Loslassen der Behälter so weit abgesenkt werden, dass die Behälter in den Puck gesetzt werden. Dass die Behälter gegriffen werden, erlaubt eine besonders einfach Entnahme aus den Pucks und Übergabe an den Einlaufstern bzw. besonders einfache Übernahme von dem Auslaufstern und Einsetzen in den Puck. Die Kurvenführung hat den Vorteil, dass es nicht nötig ist, die Hubeinrichtung mit einer Steuereinrichtung anzusteuern. Stattdessen kann rein mechanisch die geeignete Bewegung der Greifelemente bewirkt werden. Selbstverständlich ist es ebenfalls möglich, eine Steuerung vorzusehen, die die Greifelemente ansteuert.

Die Hubelemente können insbesondere in Form von Greifelementen ausgebildet sein oder solche umfassen, wobei ein Greifelement im Betrieb einen Behälter greift, beim Anheben des Behälters hält und ihn dann an den Einlaufstern übergibt. Das Greifelement ist weiterhin so ausgebildet, dass es den Behälter vom Auslaufstern übernimmt indem es den Behälter greift, den Behälter beim Absenken hält und dann wieder in den Puck setzt. Es kann eine Steuereinrichtung vorgesehen sein, die diese Greif-, Halte- und Abgabe-Vorgänge steuert. Alternativ können diese auch mechanisch ausgelöst werden. Insbesondere können diese Vorgänge und die Höhenverstellung der Greifelemente rein mechanisch bewirkt werden.

Die Transportvorrichtung kann derart ausgebildet sein, dass die Behälter von der Entnahme der Behälter aus den Pucks bis zum Einsetzen der Behälter in die Pucks hängend transportiert werden, insbesondere beim Durchlaufen der Behandlungsstrecke.

Der Zwischenstern kann als Hebestern ausgebildet sein. Das heißt, dass der Zwischenstern in Form eines Sterns ausgebildet ist, der bereits einen Hub-Mechanismus bereitstellt. Dies ermöglicht, eine kompakte und fertig vorinstallierte Lösung bereitzustellen.

Die Transportvorrichtung kann derart ausgebildet sein, dass die Pucks entlang eines Puck-Kreislaufs zu dem Zwischenstern hin und von dem Zwischenstern weg transportiert werden. Wenn es nur einen Kreislauf gibt, werden weniger Transportbänder und Einteilschnecken benötigt und es ist keine aufwändige Synchronisierung nötig, wie oben bereits erläutert wurde. Das heißt, dass der Kreislauf im Bereich der Maschine, insbesondere im Einlauf und Auslauf, ununterbrochen ist.

Die Transportvorrichtung kann eine Einteilschnecke umfassen, die derart ausgebildet und angeordnet ist, dass sie vor dem Entnehmen der Behälter aus den Pucks einen vorgegebenen Teilungsabstand zwischen aufeinanderfolgenden Pucks herstellt. Insbesondere kann genau eine solche Einteilschnecke vorgesehen sein, vor allem, wenn es genau einen Puck-Kreislauf gibt. Dies ermöglicht, im Vergleich zu den bekannten Anlagen mit mehreren Kreisläufen, einen kleineren und kompakteren Aufbau der Vorrichtung und geringere Anschaffungs-, Wartungs- und Betriebskosten.

Die Transportvorrichtung kann eine Adapterplatte umfassen, mittels derer eine Sternstellung eingestellt werden kann. Die Sternstellung ist abhängig vom Teilungsabstand der Behandlungsmaschine und des Teilkreises des Zentralsterns, wobei der Teilkreisdurchmesser des Zentralsterns vom erforderlichen Hub sowie der Länge der Pucks abhängt, und von der Anzahl der Teilungen.

Das Verfahren zum Transportieren von Pucks und Behältern umfasst, dass Behälter jeweils in einem Puck stehend zu einem Einlauf einer Behandlungsmaschine transportiert werden, entlang einer Behandlungsstrecke der Behandlungsmaschine transportiert werden und jeweils in einem Puck stehend von einem Auslauf der Behandlungsmaschine weg transportiert werden.

Die Behälter werden mittels einer Behälter-Hubeinrichtung, die integral mit einem Zwischenstern ausgebildet oder an diesem befestigt ist, zum Entnehmen der Behälter aus den Pucks vor dem Durchlaufen der Behandlungsstrecke angehoben und zum Einsetzen der Behälter in die Pucks nach dem Durchlaufen der Behandlungsstrecke abgesenkt.

Die Behälter werden erfindungsgemäss von dem Zwischenstern an einen Einlaufstern der Behandlungsmaschine übergeben, anschließend entlang der Behandlungsstrecke transportiert und nach dem Durchlaufen der Behandlungsstrecke von einem Auslaufstern an den Zwischenstern übergeben.

Die Behälter können von der Entnahme der Behälter aus den Pucks bis zum Einsetzen der Behälter in die Pucks hängend transportiert werden, insbesondere beim Durchlaufen der Behandlungsstrecke.

Es versteht sich, dass die im Zusammenhang mit der Vorrichtung genannten Merkmale und Vorteile ebenso auf das Verfahren anwendbar sind.

Weitere Merkmale und Vorteile werden nachfolgend anhand der beispielhaften Figuren erläutert. Dabei zeigen:
Figuren 1a und 1b eine schematische, nicht maßstabsgetreue Draufsicht und Schrägansicht eines Ausführungsbeispiels der Transportvorrichtung;
Figur 2 eine schematische, nicht maßstabsgetreue Schrägansicht einer ersten Hubeinrichtung.

In den Figuren werden soweit nicht anders beschrieben, für gleiche oder vergleichbare Elemente die gleichen Bezugszeichen verwendet.

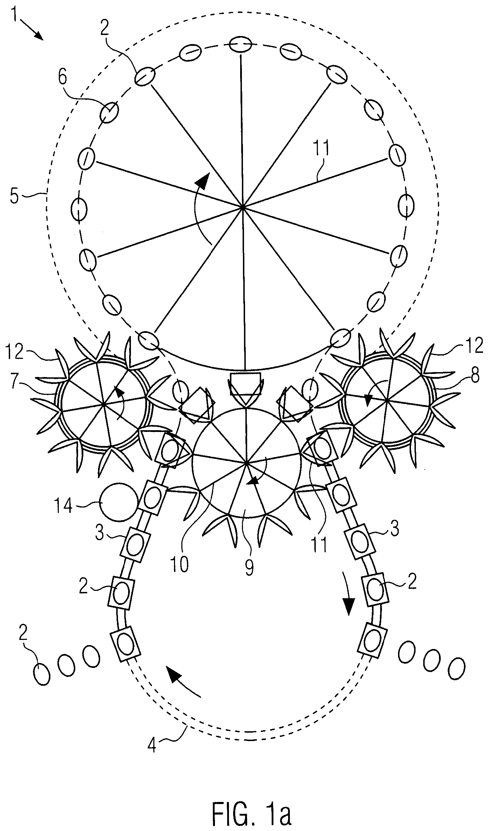

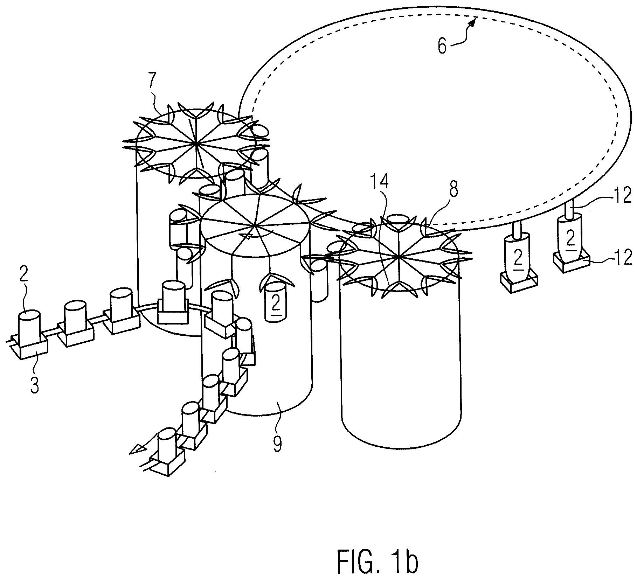

In Figur 1 ist ein Ausführungsbeispiel für eine Transportvorrichtung 1 zum Transportieren von Behältern 2 mit einer Mehrzahl von Pucks 3 zum Aufnehmen und stehenden Transport eines Behälters gezeigt.

Wie in der Schrägansicht in Figur 1b zu erkennen ist, sind die Pucks so ausgebildet, dass der untere Teil der Behälter in einer Aufnahme steht und durch die Wände der Aufnahme seitlich gestützt wird. Die Pucks werden beispielsweise mittels eines oder mehrerer unterhalb der Pucks angeordneten (hier nicht gezeigten) Transportbändern zum Fördern der Pucks transportiert. Ein optional vorgesehener Teilungsstern 14 bringt die Pucks vor dem Maschineneinlauf auf eine geeignete Teilung, sprich, die Pucks werden so positioniert, dass sie an den im Betrieb rotierenden Zwischenstern übergeben werden können. In den Pucks sind hier beispielhaft Behälter in Form von Flaschen dargestellt, wobei die Pucks auch zum Transportieren anderer Behälter ausgebildet sein können.

Die Transportvorrichtung ist derart ausgebildet, dass die Behälter mittels der Pucks zu der Behandlungsstrecke hin und von der Behandlungsstrecke weg transportierbar sind. Hier transportiert die Transportvorrichtung die Pucks entlang einer Transportstrecke, die mit dem Bezugszeichen 4 gekennzeichnet ist, zu einem Einlauf der Behandlungsmaschine, wo im Betrieb die Behälter aus dem Puck entnommen werden, hin und von einem Auslauf der Behandlungsmaschine, wo im Betrieb die Behälter wieder in die Pucks gesetzt werden, weg.

Die Transportstrecke der Pucks bildet in diesem Beispiel genau einen Kreislauf, der hier durch eine gestrichelte Linie angedeutet ist. Es sei angemerkt, dass die Behälter an beliebigen Stellen der Transportstrecke zugeführt und entnommen werden können. Die Pucks können beispielsweise mittels eines darunter angeordneten Förderbandes oder mittels Magnettransport oder auf andere Art und Weise transportiert werden.

In Figur 1a sind außerdem eine Behandlungsmaschine 5, die nicht Teil der Transportvorrichtung ist, und eine Behandlungsstrecke 6, die hier als gestrichelte Linie mit dem Bezugszeichen 6 gekennzeichnet ist, angedeutet. Die Behandlungsstrecke erstreckt sich vom Einlauf der Behandlungsmaschine zum Auslauf der Behandlungsmaschine, insbesondere im hier gezeigten Beispiel von einem Einlaufstern 7 zu einem Auslaufstern 8. Bei der Behandlungsmaschine kann es sich um einen Rundläufer handeln. Die Behandlungsmaschine kann beispielsweise eine Direktdruckmaschine, ein Eitkettierer oder eine Inspektionsmaschine sein. In der Behandlungsmaschine werden Behälter entlang der Behandlungsstrecke transportiert und behandelt, also beispielsweise bedruckt, etikettiert oder inspiziert. Die Transportvorrichtung ist hier derart ausgebildet, dass die Behälter beim Durchlaufen der Behandlungsstrecke aus den Pucks entnommen sind, und beispielsweise von Halteelementen der Behandlungsmaschine gehalten werden.

Die Transportvorrichtung umfasst zudem einen Zwischenstern 9, der das Gegenstück zum Einlaufstern und zum Auslaufstern bildet.

In dem oben beschriebenen und in Figuren 1a und 1b gezeigten Beispiel werden die Behälter im Einlauf angehoben und im Auslauf abgesenkt, um aus den Pucks entnommen bzw. in diese eingesetzt zu werden. Insbesondere werden die Behälter vor der Übergabe an den Einlaufstern angehoben und nach der Übernahme von dem Auslaufstern abgesenkt.

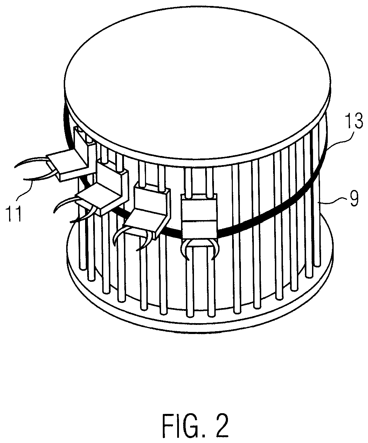

Dazu umfasst die Transportvorrichtung eine Behälter-Hubeinrichtung 10, die zum Verstellen der vertikalen Position der Behälter ausgebildet ist. Die Behälter-Hubeinrichtung ist derart ausgebildet, dass sie die Behälter für die Übergabe der Behälter an den Einlaufstern anhebt und nach der Übernahme der Behälter aus dem Auslaufstern absenkt. Die Behälter-Hubeinrichtung kann integral mit dem Zwischenstern ausgebildet sein, das heißt, der Zwischenstern kann in Form eines Hebesterns ausgebildet sein. Alternativ kann die Behälter-Hubvorrichtung jedoch auch an dem Zwischenstern befestigt sein. Eine mögliche Ausgestaltung der Behälter-Hubeinrichtung ist in Figur 2 gezeigt.

In diesem Beispiel ist die Behälter-Hubeinrichtung integral mit dem Zwischenstern ausgebildet, sprich, der Zwischenstern ist in Form eines Hebesterns ausgebildet. Alternativ kann sie auch daran befestigt sein.

In den Figuren sind, Hubelemente in Form von Greifelementen 11 des Zwischensterns gezeigt, die zum Greifen der Behälter 2 ausgebildet sind. Mit den Greifelementen werden die in den Pucks stehenden Behälter gegriffen, angehoben und dabei gehalten, bis sie an den Einlaufstern übergeben werden, und anschließend, nach dem Übernehmen von dem Auslaufstern, wieder gegriffen und gehalten, während sie abgesenkt werden, bis sie wieder in den Pucks stehen.

Zum Anheben und Absenken der Greifelemente kann beispielsweise eine (hier aufgrund der Ansicht und der Übersicht halber nicht gezeigte) Kurvenführung vorgesehen sein. Alternativ können auch die Greifelemente an einer geneigten Drehachse angebracht sein. Andere Möglichkeiten sind ebenfalls möglich, solange die Greifelemente, und somit die Behälter, einlaufseitig angehoben und auslaufseitig abgesenkt werden, so dass jeweils die Übergabe und Übernahme der Behälter an bzw. von dem Einlaufstern bzw. Einlaufstern erfolgen kann.

Zudem zeigt die Figur auch Greifelemente des Einlaufsterns und des Auslaufsterns 12.

Figur 2 zeigt eine mögliche Ausgestaltung einer Behälter-Hubeinrichtung, die für die oben beschriebene oder eine andere erfindungsgemäße Transportvorrichtung verwendet werden kann, wobei hier beispielhaft eine Kurvenführung 13 gezeigt ist, mittels derer Greifelemente angehoben werden.

In dem gezeigten Beispiel werden durch die Kurvenführung die Greifelemente geführt nach oben und unten bewegt. Beispielsweise können die Greifelemente so ausgebildet sein, dass sie von der Drehachse des Zwischensterns radial nach außen verlaufen, und dabei bis auf das Anheben ihres außenliegenden Endes, sprich bis auf eine vertikale Bewegung an dem Greif-Ende, was zu einem nach oben/unten Schwenken führt, eine Bewegung der Greifelemente relativ zu dem Zwischenstern blockiert ist. Alternativ kann auch das gesamte Greifelement vertikal bewegt, beispielsweise entlang einer Führung verschoben, werden.

Die Kurvenführung kann so angeordnet und ausgebildet sein, dass das greifende Ende der Greifelemente bzw. die Greifelemente von einer ersten Ebene auf eine zweite Ebene angehoben werden, so dass sie im Bereich der Übergabe der Behälter an den Einlaufstern auf der zweiten Ebene sind, und derart geführt werden, dass sie auch im Bereich der Übernahme der Behälter vom Auslaufstern auf der zweiten Ebene sind, und anschließend wieder auf die erste Ebene abgesenkt werden. Das heißt, die Pucks laufen auf gleicher Höhe zum Einlauf hin, von dort zum Auslauf und vom Auslauf weg.

Im Folgenden wird ein beispielhaftes erfindungsgemäßes Verfahren zum Transportieren von Behältern beschrieben. Das Verfahren kann beispielsweise unter Verwendung einer der oben beschriebenen Vorrichtungen durchgeführt werden.

In dem beispielhaften Verfahren werden Behälter jeweils in einem Puck stehend zu einem Einlauf einer Behandlungsmaschine transportiert, entlang der Behandlungsstrecke transportiert und jeweils in einem Puck stehend von einem Auslauf der Behandlungsstrecke weg transportiert. Die Behälter sind dabei beim Durchlaufen der Behandlungsstrecke aus den Pucks entnommen.

Die Behälter werden im Einlauf angehoben und so aus den Pucks entnommen, und zwar mit einer Behälter-Hubeinrichtung, die integral mit einem Zwischenstern ausgebildet oder an diesem befestigt ist (beispielsweise wie oben im Zusammenhang mit der Vorrichtung beschrieben). Anschließend werden die Behälter in die Behandlungsmaschine transportiert. Dazu können sie von dem Zwischenstern bzw. der Hubeinrichtung an einen Einlaufstern und anschließend an die Behandlungsstrecke übergeben werden. Nach Durchlaufen der Behandlungsstrecke werden die Behälter wieder abgesenkt, ebenfalls mittels der Behälter-Hubeinrichtung, und so in die Pucks eingesetzt. Insbesondere können die Behälter von der Behandlungsstrecke an einen Auslaufstern und von diesem an die Behälter-Hubeinrichtung übergeben werden.

Die Behälter können zumindest nach einer Entnahme aus den Pucks und vor einer Übergabe an die Behandlungsmaschine und nach einer Übernahme aus der Behandlungsmaschine und vor einer Übergabe an die Pucks hängend transportiert werden. Zusätzlich können die Behälter optional auch in der Behandlungsmaschine hängend transportiert werden.

Das geeignete Anheben und Absenken kann beispielsweise mittels einer im Zusammenhang mit der Vorrichtung beschriebenen Behälter-Hubeinrichtung erfolgen.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Transportvorrichtung (1) zum Transportieren von Behältern (2) mit einer Mehrzahl von Pucks (3), die jeweils zum Aufnehmen und stehenden Transport eines Behälters (2) ausgebildet sind,
wobei die Transportvorrichtung (1) einen Zwischenstern (9) und eine Behälter-Hubeinrichtung (10), die zum Verstellen der vertikalen Position der Behälter (2) ausgebildet ist, umfasst und wobei die Transportvorrichtung (1) derart ausgebildet ist, dass die Behälter (2) mittels der Pucks (3) zu einem Einlauf einer Behandlungsmaschine (5) hin und von einem Auslauf der Behandlungsmaschine (5) weg transportierbar sind,
**dadurch gekennzeichnet, dass**
die Behälter-Hubeinrichtung (10) integral mit dem Zwischenstern (9) ausgebildet oder an diesem befestigt ist und derart ausgebildet und im Betrieb derart angeordnet ist, dass sie die Behälter (2) zum Entnehmen der Behälter (2) aus den Pucks (3) vor dem Durchlaufen einer Behandlungsstrecke (6) der Behandlungsmaschine (5) anhebt und zum Einsetzen der Behälter (2) in die Pucks (3) nach dem Durchlaufen der Behandlungsstrecke (6) absenkt,
wobei die Transportvorrichtung (1) einen Einlaufstern (7) und einen Auslaufstern (8) umfasst und der Zwischenstern (9) zwischen dem Einlaufstern (7) und dem Auslaufstern (8) derart angeordnet ist, dass er bei der Übergabe an den Einlaufstern (7) und der Übernahme von dem Auslaufstern (8) zugleich das Gegenstück zum Einlaufstern (7) und zum Auslaufstern (8) bildet.

2. Transportvorrichtung (1) nach Anspruch 1, wobei die Behälter-Hubeinrichtung (10) zur Übergabe der Behälter (2) an den Einlaufstern und zur Übernahme der Behälter (2) von dem Auslaufstern ausgebildet ist.

3. Transportvorrichtung (1) nach Anspruch 1 oder 2, wobei die Behälter-Hubeinrichtung (10) derart ausgebildet ist, dass die Behälter (2) derart angehoben werden, dass sie sich nach dem Anheben in einer Position befinden, in der sie an Halteelemente des Einlaufsterns übergebbar sind.

4. Transportvorrichtung (1) nach einem der Ansprüche 1 bis 3, wobei die Behälter-Hubeinrichtung (10) zur Übernahme der Behälter (2) von Halteelementen des Auslaufsterns und anschließendem Absenken der Behälter (2) ausgebildet ist.

5. Transportvorrichtung (1) nach einem der Ansprüche 1 bis 4, wobei die Behälter-Hubeinrichtung (10) Hubelemente (11) zum Greifen jeweils eines Behälters (2) und eine Kurvenführung (12), umfasst, die derart ausgebildet und im Betrieb derart angeordnet ist, dass die Hubelemente (11) nach dem Greifen der Behälter (2) so weit angehoben werden, dass die Behälter (2) aus den Pucks (3) entnommen werden, und/oder vor dem Loslassen der Behälter (2) so weit abgesenkt werden, dass die Behälter (2) in den Puck (3) gesetzt werden.

6. Transportvorrichtung (1) nach einem der Ansprüche 1 bis 5, wobei die Transportvorrichtung (1) derart ausgebildet ist, dass die Behälter (2) von der Entnahme der Behälter (2) aus den Pucks (3) bis zum Einsetzen der Behälter (2) in die Pucks (3) hängend transportiert werden, insbesondere beim Durchlaufen der Behandlungsstrecke (6).

7. Transportvorrichtung (1) nach einem der Ansprüche 1 bis 6, wobei der Zwischenstern (9) als Hebestern ausgebildet ist.

8. Transportvorrichtung (1) nach einem der Ansprüche 1 bis 7, wobei die Transportvorrichtung (1) derart ausgebildet ist, dass die Pucks (3) entlang eines Puck-Kreislaufs zu dem Zwischenstern (9) hin und von dem Zwischenstern (9) weg transportiert werden.

9. Transportvorrichtung (1) nach einem der Ansprüche 1 bis 8, umfassend eine Einteilschnecke, die derart ausgebildet und angeordnet ist, dass sie vor dem Entnehmen der Behälter (2) aus den Pucks (3) einen vorgegebenen Teilungsabstand zwischen aufeinanderfolgenden Pucks (3) herstellt.

10. Verfahren zum Transportieren von Pucks (3) und Behältern (2), wobei Behälter (2) jeweils in einem Puck (3) stehend zu einem Einlauf einer Behandlungsmaschine (5) transportiert werden, entlang einer Behandlungsstrecke (6) der Behandlungsmaschine transportiert werden und jeweils in einem Puck (3) stehend von einem Auslauf der Behandlungsmaschine (5) weg transportiert werden,
**dadurch gekennzeichnet, dass**
die Behälter (2) mittels einer Behälter-Hubeinrichtung (10), die integral mit einem Zwischenstern (9) ausgebildet oder an diesem befestigt ist, zum Entnehmen der Behälter (2) aus den Pucks (3) vor dem Durchlaufen der Behandlungsstrecke (6) angehoben und zum Einsetzen der Behälter (2) in die Pucks (3) nach dem Durchlaufen der Behandlungsstrecke (6) abgesenkt werden,
wobei die Behälter (2) von dem Zwischenstern (9) an einen Einlaufstern (7) der Behandlungsmaschine (5) übergeben werden, anschließend entlang der Behandlungsstrecke (6) transportiert werden, und nach dem Durchlaufen der Behandlungsstrecke (6) von einem Auslaufstern (8) an den Zwischenstern (9) übergeben werden.

11. Verfahren zum Transportieren von Pucks (3) und Behältern (2) nach Anspruch 10, wobei die Behälter (2) von der Entnahme der Behälter (2) aus den Pucks (3) bis zum Einsetzen der Behälter (2) in die Pucks (3) hängend transportiert werden, insbesondere beim Durchlaufen der Behandlungsstrecke (6).

## Claims

1. A transport device (1) for transporting containers (2) with a plurality of pucks (3), which are each designed for receiving a container (2) and for standing transport of the container (2),
wherein the transport device (1) comprises an intermediate starwheel (9) and a container lifting device (10) designed to adjust the vertical position of the containers (2), and
wherein the transport device (1) is designed such that the containers (2) can be transported by means of the pucks (3) to an inlet of a treatment machine (5) and away from an outlet of the treatment machine (5),
**characterized in that**
the container lifting device (10) is integrally formed with or attached to the intermediate starwheel (9) and is formed and arranged in operation such that it lifts the containers (2) for removing the containers (2) from the pucks (3) before they pass through a treatment section (6) of the treatment machine (5) and lowers the containers (2) for inserting the containers (2) into the pucks (3) after they have passed through the treatment section (6),
wherein the transport device (1) comprises an infeed starwheel (7) and an outfeed starwheel (8) and the intermediate starwheel (9) is arranged between the infeed starwheel (7) and the outfeed starwheel (8) such that during transfer to the infeed starwheel (7) and taking over from the outfeed starwheel (8), it simultaneously forms the counterpart to the infeed starwheel (7) and the outfeed starwheel (8).

2. The transport device (1) according to claim 1, wherein the container lifting device (10) is designed for transferring the containers (2) to the infeed starwheel and for taking the containers (2) over from the outfeed starwheel.

3. The transport device (1) according to claim 1 or 2, wherein the container lifting device (10) is designed such that the containers (2) are lifted in such a way that after lifting they are in a position in which they can be transferred to holding elements of the infeed starwheel.

4. The transport device (1) according to any one of claims 1 to 3, wherein the container lifting device (10) is designed for taking over the containers (2) from holding elements of the outfeed starwheel and for subsequently lowering the containers (2).

5. The transport device (1) according to any one of claims 1 to 4, wherein the container lifting device (10) comprises lifting elements (11) for gripping a respective container (2) and a curve guide (12), which is designed and arranged in operation such that the lifting elements (11) are lifted so far after gripping of the containers (2) that the containers (2) are removed from the pucks (3) and/or are lowered so far before the containers (2) are released that the containers (2) are placed in the puck (3).

6. The transport device (1) according to any one of claims 1 to 5, wherein the transport device (1) is designed such that the containers (2) are transported hanging, from the removal of the containers (2) from the pucks (3) until insertion of the containers (2) into the pucks (3), in particular when passing through the treatment section (6).

7. The transport device (1) according to any one of claims 1 to 6, wherein the intermediate starwheel (9) is designed as a lifting starwheel.

8. The transport device (1) according to any one of claims 1 to 7, wherein the transport device (1) is designed such that the pucks (3) are transported along a puck circuit to and away from the intermediate starwheel (9).

9. The transport device (1) according to any one of claims 1 to 8, comprising an infeed worm which is designed and arranged in such a way that, before removing the containers (2) from the pucks (3), it creates a predetermined spacing between successive pucks (3).

10. A method for transporting pucks (3) and containers (2), wherein containers (2) are each transported standing in a puck (3) to an inlet of a treatment machine (5),
are transported along a treatment section (6) of the treatment machine and are each transported standing in a puck (3) away from an outlet of the treatment machine (5),
**characterized in that**
the containers (2) are lifted by means of a container lifting device (10), which is integrally formed with or attached to an intermediate starwheel (9), for removing the containers (2) from the pucks (3) before they pass through the treatment section (6) and are lowered for inserting the containers (2) into the pucks (3) after they have passed through the treatment section (6),
wherein the containers (2) are transferred from the intermediate starwheel (9) to an infeed starwheel (7) of the treatment machine (5), are subsequently transported along the treatment section (6), and are transferred from an outfeed starwheel (8) to the intermediate starwheel (9) after having passed through the treatment section (6).

11. The method for transporting pucks (3) and containers (2) according to claim 10, wherein the containers (2) are transported hanging, from the removal of the containers (2) from the pucks (3) until insertion of the containers (2) into the pucks (3), in particular when passing through the treatment section (6).

## Revendications

1. Dispositif de transport (1) permettant de transporter des récipients (2), comportant une pluralité de palettes (3) conçues respectivement pour accueillir et transporter debout un récipient (2),
dans lequel le dispositif de transport (1) comprend une étoile intermédiaire (9) et un appareil de levage de récipients (10) conçu pour ajuster la position verticale des récipients (2), et
dans lequel le dispositif de transport (1) est conçu de telle manière que les récipients (2) peuvent être transportés au moyen des palettes (3) dans une direction allant vers une entrée d'une machine de traitement (5) et dans un direction s'éloignant d'une sortie de la machine de traitement (5),
**caractérisé en ce que**
l'appareil de levage de récipients (10) est formé d'un seul tenant avec l'étoile intermédiaire (9) ou est fixé à celle-ci et est formé de telle manière et agencé pendant le fonctionnement de telle manière qu'il soulève les récipients (2) afin de retirer les récipients (2) à partir des palettes (3) avant de parcourir une voie de traitement (6) de la machine de traitement (5) et les abaisse pour insérer les récipients (2) dans les palettes (3) après avoir parcouru la voie de traitement (6), dans lequel le dispositif de transport (1) comprend une étoile d'entrée (7) et une étoile de sortie (8) et l'étoile intermédiaire (9) est agencée entre l'étoile d'entrée (7) et l'étoile de sortie (8) de telle manière qu'elle forme simultanément le pendant de l'étoile d'entrée (7) et de l'étoile de sortie (8) lors de la transmission à l'étoile d'entrée (7) et de la reprise à l'étoile de sortie (8).

2. Dispositif de transport (1) selon la revendication 1, dans lequel l'appareil de levage de récipients (10) est conçu pour transmettre les récipients (2) à l'étoile d'entrée et pour reprendre les récipients (2) à l'étoile de sortie.

3. Dispositif de transport (1) selon la revendication 1 ou 2, dans lequel l'appareil de levage de récipients (10) est conçu de telle manière que les récipients (2) sont soulevés de telle manière qu'ils se trouvent après le levage dans une position dans laquelle ils peuvent être transmis à des éléments de maintien de l'étoile d'entrée.

4. Dispositif de transport (1) selon l'une quelconque des revendications 1 à 3, dans lequel l'appareil de levage de récipients (10) est conçu pour reprendre les récipients (2) aux éléments de maintien de l'étoile de sortie (2) et abaisser ensuite les récipients (2).

5. Dispositif de transport (1) selon l'une quelconque des revendications 1 à 4, dans lequel l'appareil de levage de récipients (10) comprend des éléments de levage (11), permettant de saisir respectivement un récipient (2), et un guidage de courbe (12) conçu de telle manière et agencé pendant le fonctionnement de telle manière que, après la saisie des récipients (2), les éléments de levage (11) sont suffisamment soulevés pour que les récipients (2) soient retirés des palettes (3) et/ou que, avant la libération des récipients (2), ils soient suffisamment abaissés pour que les récipients (2) soient placés dans la palette (3).

6. Dispositif de transport (1) selon l'une quelconque des revendications 1 à 5, dans lequel le dispositif de transport (1) est conçu de telle manière que les récipients (2) sont transportés de manière suspendue depuis le retrait des récipients (2) à partir des palettes (3) jusqu'à l'insertion des récipients (2) dans les palettes (3), en particulier lorsqu'ils parcourent la voie de traitement (6).

7. Dispositif de transport (1) selon l'une quelconque des revendications 1 à 6, dans lequel l'étoile intermédiaire (9) est réalisée sous la forme d'une étoile de levage.

8. Dispositif de transport (1) selon l'une quelconque des revendications 1 à 7, dans lequel le dispositif de transport (1) est conçu de telle manière que les palettes (3) sont transportées le long d'un circuit de palettes dans une direction allant vers l'étoile intermédiaire (9) et dans une direction s'éloignant de l'étoile intermédiaire (9).

9. Dispositif de transport (1) selon l'une quelconque des revendications 1 à 8, comprenant une vis sans fin conçue et agencée de telle manière qu'elle produit un intervalle de séparation prédéterminé entre des palettes (3) successives avant que les récipients (2) soient retirés des palettes (3).

10. Procédé de transport de palettes (3) et de récipients (2), dans lequel des récipients (2) sont transportés debout respectivement dans une palette (3) dans une direction allant vers une entrée d'une machine de traitement (5), sont transportés le long d'une voie de traitement (6) de la machine de traitement, et sont transportés debout respectivement dans une palette (3) dans une direction s'éloignant d'une sortie de la machine de traitement (5),
**caractérisé en ce que**
les récipients (2) sont soulevés au moyen d'un appareil de levage de récipients (10) formé d'un seul tenant avec une étoile intermédiaire (9) ou fixé à celle-ci, afin de retirer les récipients (2) à partir des palettes (3) avant de parcourir la voie de traitement (6) et sont abaissés pour insérer les récipients (2) dans les palettes (3) après avoir parcouru la voie de traitement (6),
dans lequel les récipients (2) sont transmis de l'étoile intermédiaire (9) à une étoile d'entrée (7) de la machine de traitement (5), sont ensuite transportés le long de la voie de traitement (6), et sont transmis d'une étoile de sortie (8) à l'étoile intermédiaire (9) après avoir parcouru la voie de traitement (6).

11. Procédé de transport de palettes (3) et de récipients (2) selon la revendication 10, dans lequel les récipients (2) sont transportés de manière suspendue depuis le retrait des récipients (2) à partir des palettes (3) jusqu'à l'insertion des récipients (2) dans les palettes (3), en particulier lorsqu'ils parcourent la voie de traitement (6).
